**Europäisches Patentamt**

**European Patent Office**

**Office européen des brevets**

(19)

(11) Veröffentlichungsnummer: **0 032 669**
**B1**

(12) ## EUROPÄISCHE PATENTSCHRIFT

(45) Veröffentlichungstag der Patentschrift:
**12.10.83**

(51) Int. Cl.³: **B 29 H 17/00**

(21) Anmeldenummer: **81100060.3**

(22) Anmeldetag: **08.01.81**

(54) **Verfahren und Vorrichtung zur Herstellung verstärkter Luftreifen.**

(30) Priorität: **19.01.80 DE 3001865**
**17.03.80 DE 8007290 U**

(43) Veröffentlichungstag der Anmeldung:
**29.07.81 Patentblatt 81/30**

(45) Bekanntmachung des Hinweises auf die Patenterteilung:
**12.10.83 Patentblatt 83/41**

(84) Benannte Vertragsstaaten:
**BE DE FR GB IT**

(56) Entgegenhaltungen:
**EP-A-0 006 188**
**EP-A-0 006 425**
**EP-A-0 016 364**
**DE-A-1 479 104**
**DE-A-1 916 163**
**DE-A-2 347 609**
**DE-A-2 516 941**
**FR-A-2 144 809**

(73) Patentinhaber: **BAYER AG, Zentralbereich Patente, Marken und Lizenzen, D-5090 Leverkusen 1, Bayerwerk (DE)**

(72) Erfinder: **Knipp, Ulrich, Dr., Haberlandstrasse 3, D-5060 Bergisch Gladbach 2 (DE)**
Erfinder: **Just, Gerhard, Ing. grad., Finkenweg 2, D-5653 Leichlingen (DE)**
Erfinder: **Sahler, Gerd, Engstenberg E 31, D-5090 Leverkusen (DE)**
Erfinder: **Boden, Heinrich, Sperberweg 14, D-5090 Leverkusen 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren und Vorrichtung zur Herstellung verstärkter Luftreifen

Die Erfindung betrifft ein Verfahren zur Herstellung von verstärkten Luftreifen nach dem Schleudergiessverfahren aus Mehrkomponentenreaktionsgemischen, wobei zur Erzeugung der inneren Reifenkontur eine einzige Kernform erforderlich ist, und eine Vorrichtung zur Herstellung von Luftreifen nach dem Schleudergiessverfahren, enthaltend eine rotierende Form zur Festlegung der Aussenkontur, einen mitrotierenden Kern zur Festlegung der Innenkontur des fertigen Reifens, sowie entsprechende Dosier- und Mischvorrichtungen zur Einspeisung von gegebenenfalls sich in der Zusammensetzung ändernder Mehrkomponentenreaktionsgemischen in den Raum zwischen Schleudergiessform und Kern. Als Mehrkomponentenreaktionsgemische kommen hauptsächlich solche in Frage, die Polyurethane bilden.

Polyurethanreifen mit einer Verstärkungseinlage unter der Lauffläche sind bekannt. Bei der Herstellung werden Cordwicklungen oder Gewebeeinlagen direkt auf den Reifenkern gewickelt (DE-OS 15 05 030). Bei einem so hergestellten Reifen reissen häufig beim Aufblasen die Windungen der Verstärkungseinlage aus dem Reifenmaterial aus, da sie unmittelbar an ihrer Innenfläche aufliegen und die Ummantelung mit dem Polyurethan-Elastomer keine ausreichende Haftung ergibt, um den auftretenden Kräften entgegenwirken zu können. Es ist auch ein Reifen bekannt, bei dem die Gürtelarmierung durch Stege oder Noppen an einem entsprechend ausgebildeten Formkern oder durch eine Distanzschicht (DE-OS 16 05 684) von der inneren Oberfläche des Reifens weiter entfernt fixiert werden kann. Jedoch wirken sich die Markierungen, die sich zwangsläufig in der Reifeninnenkontur ausbilden, nachteilig aus; es können dadurch Kerbwirkungen hervorgerufen werden, und wegen der nicht glatten Oberfläche kann auch der Reifenschlauch durch Scheuern zerstört werden. Bei der getrennten Herstellung von Lauffläche und Karkasse in verschiedenen Formwerkzeugen ist das Einbetten der Gürtelarmierung im Bereich der neutralen Faser möglich. Neben der aufwendigen Fertigung (DE-OS 22 24 352) eines solchen Reifens sind vor allem Haftungsschwierigkeiten zwischen dem Laufflächen- und Karkassenmaterial nachteilig. Bei einem weiteren Verfahren (DE-OS 29 17 347) ist vorgeschlagen worden, ein vorgefertigtes Faservlies um den Reifenkern zu legen, an dem die Gürtellage abgestützt werden kann. Bei der Verarbeitung höherviskoser Reaktionsgemische treten dabei insbesondere bei kurzen Abbindezeiten Entlüftungsprobleme während des Schleudergiessvorganges auf.

Zur Herstellung von gegossenen, spritzgegossenen oder geschleuderten Fahrzeugreifen ist ein Reifenkern erforderlich, dessen Entfernung aus dem Reifen wegen der Hinterschneidungen Probleme aufwirft. Bekannt sind neben teilbaren metallischen Kernen (DE-OS 29 00 565) und sogenannten Verlustkernen aus Schaumstoff, die nur einmal zu verwenden sind, elastische, mit Druck beaufschlagbare Bälge (DE-OSen 28 32 566 und 22 31 780). Von Nachteil bei diesen elastischen Bälgen sind die Einschränkungen bei der Formgebung. Der Balg ist gewöhnlich näherungsweise torusförmig, so dass die Innenkontur des Reifens immer näherungsweise kreisförmigen Querschnitt hat. Es ist auch ein membranartig ausgebildeter Kern bekannt, um den Verformungskräften beim Schleudern besser entgegenwirken zu können.

In der EP-A-0 006 425 ist ein Reifen beschrieben, dessen Verstärkungseinlagen in den für den Reifen optimalen Positionen sein können. Das wird jedoch nur durch ein Zusammenkleben vorgefertigter Teile oder in einem zweistufigen Schleuderverfahren mit zwei verschieden grossen Kernen erreicht.

Der Erfindung liegt die Aufgabe zugrunde, die wirtschaftliche Herstellung armierter Luftreifen aus Polyurethan-Elastomeren derart zu ermöglichen, dass sich die Verstärkungseinlagen an den für den Reifen optimalen Positionen im Reifen befinden. Die Verstärkungseinlagen müssen allseitig von den Polyurethan-Elastomeren ummantelt sein. Zusätzlich im Reifen verbleibende oder die Reifeninnenkontur bei der Herstellung beeinflussende Distanzkörper sollen nicht erforderlich sein. Es sollen auch Reifen herstellbar sein, deren Innenkontur stärker vom kreisförmigen Querschnitt abweicht.

Die Aufgabe wird verfahrensmässig dadurch gelöst, dass als Kern ein Balg verwendet wird, der erforderlichenfalls durch eine rotationssymmetrische Auffütterung aus elastischem Material die gewünschte Kerninnenkontur des fertigen Reifens gewährleistet, und dass zunächst elastische Teilbereiche des Kerns soweit zur äusseren Reifenseite hin verformt werden, dass daran anliegende Verstärkungseinlagen bereits die im fertigen Reifen gewünschte Lage einnehmen und die Verstärkungseinlagen durch die verformten Kernteilbereiche in dieser gewünschten Lage durch Reibschluss fixiert werden, der Raum zwischen der Form und dem Kern soweit mit Reaktionsgemisch gefüllt wird, dass die Verstärkungseinlagen auch von dem sich bildenden äusseren Reifenteil her gehalten werden, dann die elastische Verformung der Teilbereiche des Kerns rückgängig gemacht wird und der verbleibende Raum zwischen dem äusseren Reifenteil und dem jetzt die Innenkontur des fertigen Reifens bildenden Kern mit Reaktionsgemisch gefüllt wird.

Vorrichtungsmässig wird die Aufgabe dadurch gelöst, dass der Kern im Ruhezustand die an sich gewünschte glatte Kernform für die Innenkontur des fertigen Luftreifens bildet, jedoch an der Kernform durch Druckbeaufschlagung von der Kerninnenseite her elastisch verformbare Teilbereiche vorhanden sind, durch die sich der Kern so aufweiten lässt, dass die Verstärkungseinlagen für den Reifen an dem verformten Kern in einer solchen Lage durch Reibung fixierbar sind, dass sie in diesem Zustand die Lage wie im fertigen Reifen einnehmen. Weitere vorteilhafte Weiterbildungen sind in den Unteransprüchen angegeben.

Die elastisch verformbaren Teilbereiche des Kerns lassen sich mit im übrigen metallisch aufgebautem, segmentiertem Kern, als auch mit elastischen, balgförmigen Kernen kombinieren. Dabei können die zur Formung der Innenkontur des Reifens verwendeten elastischen Bälge in steifer, konturstabiler Ausführung, ebenso wie auch ein segmentierter Kern, von der kreisrunden Form abweichen. Bei stärkerer Abweichung der Innenkontur vom kreisförmigen Querschnitt ist der Balg aussen mit einer Auffütterung aus elastischem Material versehen. Der innere Teil dieses Balges ist nach wie vor torusförmig, jedoch ist er durch die Auffütterung an die gewünschte Innenkontur des herzustellenden Reifens angepasst. Die Auffütterung besteht in vielen Fällen aus dem gleichen Material wie der innere Balg, also aus Elastomeren, die vorzugsweise massiv oder geschäumt mit massiver Deckschicht sind, auf Basis von Naturkautschuk, Butyl, Polychloropren, Polyurethan, Silikonkautschuk oder Äthylen-Propylen-Terpolymere. In einer Ausführungsform ist die Auffütterung fest mit dem Balg verbunden. Ganz besonders bei der Verwendung verschiedener Elastomere müssen geeignete Haftvermittler verwendet werden. In einer anderen Ausführungsform sind Balg und Auffütterung wie getrennte Elemente; die Auffütterung ist durch Reibschluss mit dem Balg fixiert. Bei einem Balg kommt als Vorteil dazu, dass er wegen seiner Verformbarkeit im druckentlasteten Zustand leicht aus dem Reifeninnenraum entformbar ist.

Da sich die elastisch verformbaren Teilbereiche am Kern in einer vielfältigen Weise ausbilden lassen, lässt sich erreichen, dass sich alle zur Verstärkung eines Reifens erforderlichen Armierungseinlagen an der richtigen Stelle im Reifenquerschnitt, beispielsweise in der neutralen Faser, anbringen lassen. Die Teilbereiche bestehen beispielsweise aus einem auf den Kern eingelegten schlauchähnlichen Gebilde, das innen druckbeaufschlagbar ist. Es kann in seinem, dem Kern zugewandten Bereich armiert sein. An Stelle eines Schlauches können auch einzelne, auf dem Umfang gleichmässig verteilte, druckbeaufschlagbare Kissen verwendet werden. Eine weitere vorteilhafte Ausbildung in Verbindung mit einem elastischen Balg besteht in der membranartigen Ausführung von, auf den Umfang des verstärkten Balges gleichmässig angeordneten, unverstärkten Teilbereichen. Solche elastischen Teilbereiche können aus Kautschuk oder Chemiewerkstoffen bestehen. Da nur Teilbereiche vom Kern aufgeweitet sind, verbleibt noch genügend Raum für eine sichere Entlüftung. Bei einem aufgefütterten Balg sind während der Reifenherstellung Balg und Auffütterung form- und kraftschlüssig miteinander verbunden. Die Auffütterung darf sich unter den maximal auftretenden Drücken (rund 10 bar) nicht bleibend verformen. Der innere Balg ist gewöhnlich armiert, Stahlcord oder Cordfäden auf Basis synthetischer Produkte wie Polyester, Polyamid, Celluloseacetat, Polyacrylnitril oder Polycarbonat sind geeignet. Die Cordfäden liegen üblicherweise in radialer Richtung bezogen auf die Torusachse, also bei einem unten offenen Balg von Wulstdraht zu Wulstdraht.

In die Form wird solange ein Reaktionsgemisch eingebracht, bis es in Kontakt mit der Verstärkungseinlage kommt. Durch die relativ kurzen Abbindezeiten des Reaktionsgemisches werden die zumindest teilummantelten Verstärkungseinlagen von dem von der Form gehaltenen äusseren Reifenteil in ihrer Lage fixiert, so dass die Halterung der Verstärkungseinlage durch die elastisch verformten Teilbereiche des Kerns nicht mehr erforderlich ist und die Verstärkungseinlage auch nach der Rücknahme der Druckbeaufschlagung des Kernes her an den ausgewählten optimalen Stellen im Reifenquerschnitt verbleiben. Da der Reifenkern nach der Rücknahme der Verformung der Teilbereiche die übliche glatte, die Innenkontur des Reifens bildende Form hat, kann durch weitere Zufuhr von Reaktionsgemisch ein gleichmässiger verstärkter Reifen aus Mehrkomponentenreaktionsgemischen in einem Arbeitsgang erhalten werden.

Von besonderem Vorteil ist auch, dass z.B. nach diesem Schleudergiessverfahren und mit dieser Vorrichtung ein Reifen hergestellt werden kann, wo während des Reifenaufbaus die Rezeptur geändert wird. Beispielsweise lässt sich dadurch ein Reifen mit einer weicheren Lauffläche und härteren Karkassenteilen herstellen, ohne dass eine Verschlechterung der Lage der Verstärkungseinlagen in Kauf genommen werden muss.

Mit Hilfe eines Kerns mit eine Auffütterung lassen sich Reifen bauen, die bei gleicher Festigkeit und Haltbarkeit leichter sind, weil an Stellen, wo gar kein grosser Materialquerschnitt im Reifen benötigt wird, durch geeignete Auffütterung des Kerns die Reifendicke verkleinert werden kann, was bei runden Kernen nicht möglich ist, weil sonst zwangsläufig an anderen wichtigen Stellen keine ausreichende Materialmenge mehr untergebracht werden kann. Insbesondere lässt sich so ein Querschnitt realisieren, bei dem die Lauffläche näherungsweise überall gleich dick ist; es ergibt sich eine beträchtliche Materialeinsparung im Übergangsbereich von der Lauffläche zur Mantelfläche, und das geringere Gewicht des Reifens ist schon an sich ein Vorteil.

Das erfindungsgemässe Verfahren ist im folgenden weiter beschrieben und eine Vorrichtung beispielhaft dargestellt. Es zeigen:

Fig. 1 Ausschnitt eines Kernes mit einem eingefahrenen und ausgefahrenen Fixierungselement mit einem Seitenteil des Reifens;

Fig. 2 Querschnitt eines Kernes in Balgausführung mit integrierten elastisch verformbaren Fixierungselementen und Luftreifen;

Fig. 3 Längsschnitt eines Kernes in Balgausführung mit integrierten, elastisch verformbaren Fixierungselementen und Luftreifen;

Fig. 4 metallischer segmentierter Kern mit schlauchförmigen Fixierungselementen;

Fig. 5 Schnitt durch Schleuderform zur Herstellung des Reifens;

Fig. 6 Schnitt durch eine Schleuderform mit einem Kern mit Auffütterung.

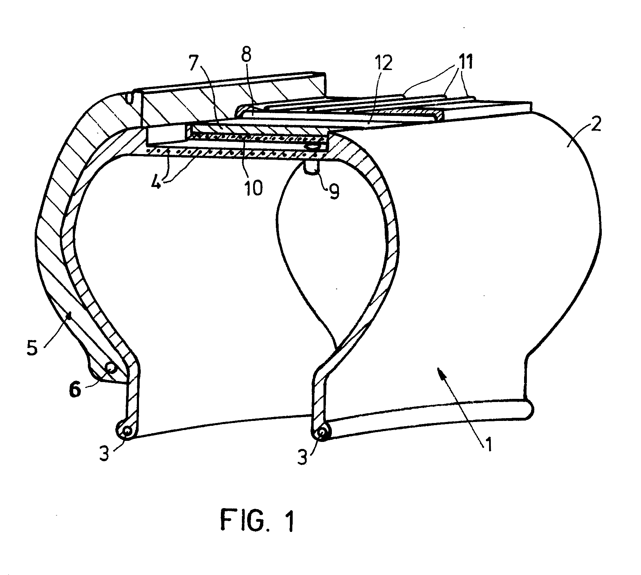

In Fig. 1 ist ein Ausschnitt eines Kernes 1 einer sonst nicht weiter dargestellten Form. In diesem Beispiel ist der Kern ein elastischer Balg 2 mit Wulstkabel 3 und Verstärkungen 4. Auf einer Seite ist angedeutet, wie der herzustellende Reifen 5 mit dem Wulstdraht 6 um den Kern 1 liegt. Das Besondere ist die Ausbildung des Zenitbereichs des Kerns 1. Er enthält elastisch verformbare Bereiche 7, 8, die in diesem Beispiel näherungsweise rechteckige Form haben und in zwei Extremstellungen gezeigt sind, die praktisch nicht gleichzeitig auftreten können. Im entlasteten Zustand ist das Fixierungselement 7 Teil des glatten Kerns 1, der die Innenkontur des Reifens 5 bildet. Durch Öffnungen 9 von der Kerninnenseite her können die Fixierungselemente mit Druck beaufschlagt werden. Pressluft oder Hydraulikflüssigkeit sind geeignet. Der Kern 1 ist so hinreichend stabil, dass er durch die Druckbeaufschlagung praktisch nicht verformt wird; dagegen werden die Fixierungselemente 7, 8 radial nach aussen gedrückt. Das Fixierungselement 8 ist in einer solchen extremen Stellung gezeigt. Die Fixierungselemente 7, 8 können ihrerseits verstärkt 10 sein, damit eine gewünschte Oberfläche der Teilbereiche erreicht werden kann. Die elastisch verformbaren Teilbereiche, die Fixierungselemente und der Druck sind so aufeinander agbestimmt, dass sie im verformten Zustand die Verstärkungselemente für den zu fertigenden Luftreifen 5 durch Reibungskräfte in der vorgesehenen Entfernung von der Aussenkontur des Reifens 5 halten, beispielsweise in der neutralen Faser. In dieser aufgeweiteten Stellung 8 verbleibt der Reifenkern während der Reifenherstellung mindestens solange, bis der Spiegel des sich von aussen nach innen aufbauenden Reaktionsgemisches die gesamte Armierung 11 benetzt hat. Dieser Vorgang wird zeitlich gesteuert. Anschliessend werden die aufgeweiteten Fixierungselemente 8 durch Druckentlastung in den alten Zustand 7 zurückverformt, während die Verstärkungselemente 11 durch das eingebrachte Reaktionsgemisch in ihrer Lage gehalten werden. Während des Entspannungsvorganges tritt Reaktionsgemisch zwischen die Verstärkungslage 11 und die Oberfläche 12 der zurückgezogenen Fixierungselemente, bis schliesslich der gesamte Reifenquerschnitt mit Reaktionsgemisch gefüllt ist.

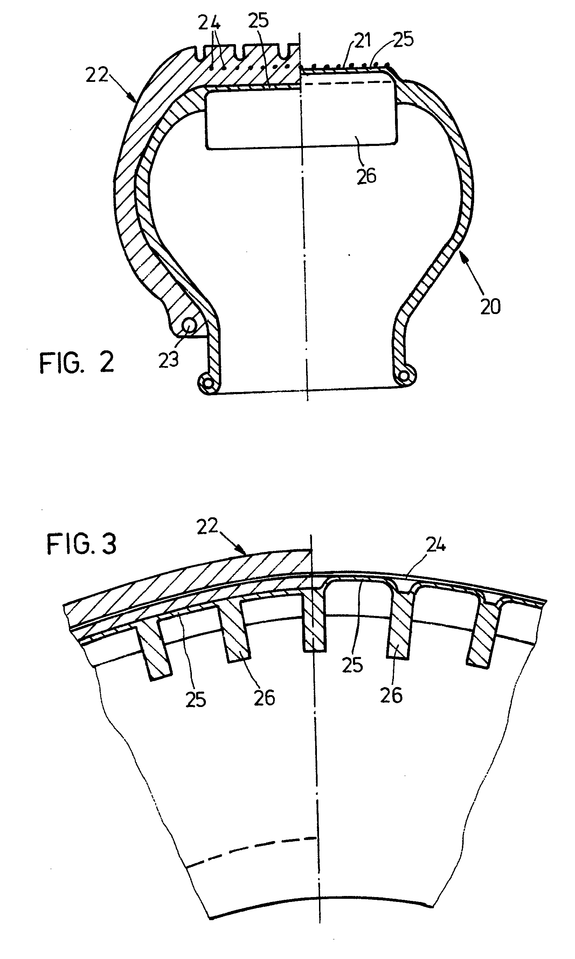

Fig. 2 zeigen einen ähnlichen Ausschnitt wie Fig. 1: einen Querschnitt durch einen balgförmigen Reifenkern 20, wobei der rechte Teilbereich den Ausgangszustand mit einem elastisch verformten Teilbereich 21 zeigt, während der linke Teilbereich den Endzustand der Reifenherstellung anzeigt. In dem Reifen 22 mit Wulstdraht 23 sind die Verstärkungseinlagen 24 in Reifenumlaufrichtung, näherungsweise in der Mitte des Reifenquerschnitts und vollkommen mit dem Reaktionsgemisch umhüllt. Die elastisch verformbaren Teilbereiche sind hier rechteckige Membranen 25;

diese werden von gegebenenfalls verstärkten Rippen 26 begrenzt.

Der in Fig. 2 dargestellte Bereich ist in Fig. 3 als Längsschnitt gezeichnet. Die Bezugzeichen haben die gleiche Bedeutung wie in Fig. 2. Im rechten Teilbereich ist der Ausgangszustand gezeichnet. Die Verstärkungseinlagen 24 liegen auf den elastisch verformten Membranen 25 auf und werden durch sie auch während des Schleudervorganges in der richtigen Lage gehalten. Das linke Teilfeld zeigt den Endzustand mit den fertig ausgebildeten Reifen 22.

Wie das Reaktionsgemisch zusammengesetzt ist und wie es in den Hohlraum zwischen Form und Kern gebracht wird, ist bekannt und daher ebensowenig beschrieben wie andere z.B. mit dem Schleudergiessverfahren zusammenhängende Verfahrensschritte.

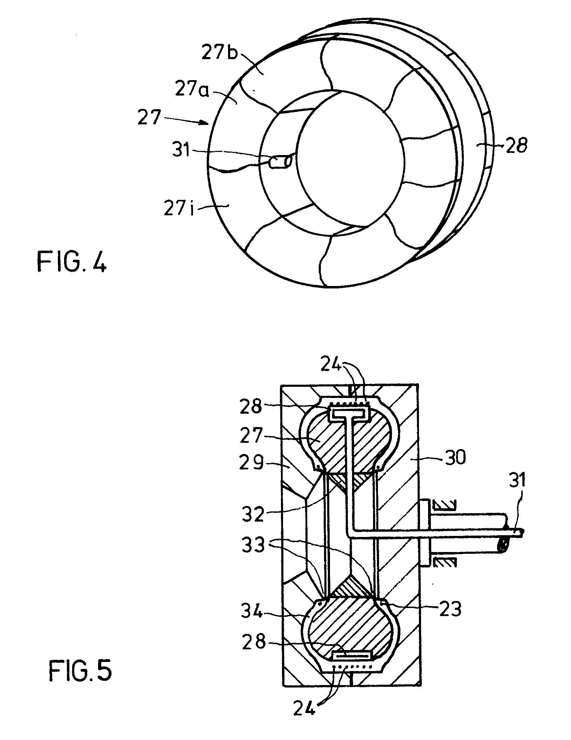

Fig. 4 zeigt einen metallischen Kern 27, der aus 9 Segmenten 27a-27i zusammengesetzt ist. Das Fixierungselement 28 ist hier schlauchförmig. Durch Druckaufschlagung über die Leitung 31 kann der Aussendurchmesser des Kernes 27 verändert werden.

Fig. 5 zeigt den Kern 27 von Fig. 4 im einbebauten Zustand in einer Schlauchform 29, 30. Im oberen Teil des Bildes ist der Fixierungselement 28 durch Druckbeaufschlagung über die Leitung 31 aufgeweitet. In dieser Stellung werden die Verstärkungseinlagen 24 fixiert. Im unteren Teil der Fig. 5 ist das Fixierungselement 28 druckentlastet, der Formenhohlraum 34 mit Reaktionsgemisch gefüllt und die Verstärkungseinlagen 24 sind vollständig eingebetet. Die Füllung erfolgt über die Angussbereiche 33, die von der Formhälfte 29 bzw. 30 mit dem Zentrierkegel 32 gebildet werden.

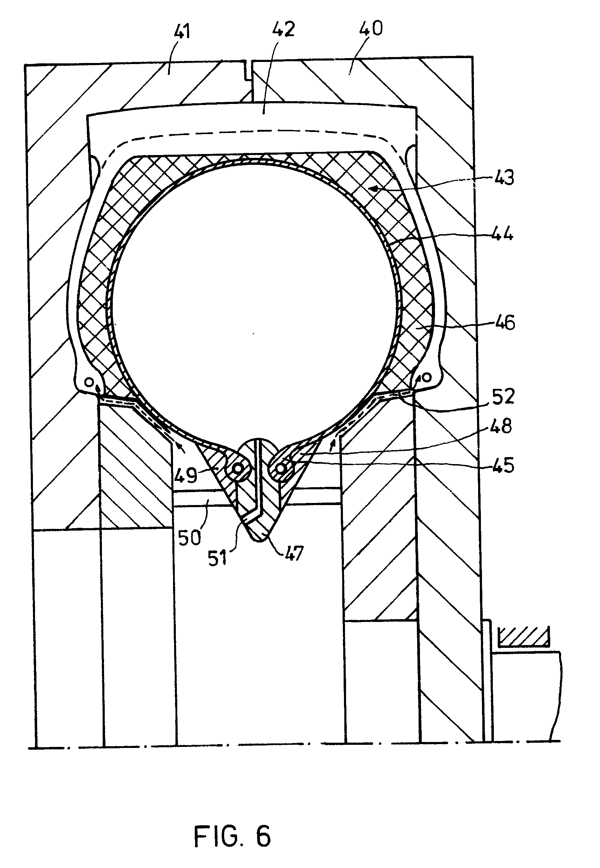

Fig. 6 zeigt einen Querschnitt durch den oberen Teil der Schleudergiessvorrichtung ähnlich wie in Fig. 5; jedoch ist der erfindungsgemässe Teil der elastischen Teilbereiche nicht gezeichnet, um zu verdeutlichen, dass so nicht notwendigerweise nur näherungsweise torusförmige Reifen sondern auch beispielsweise armierte Reifen mit einen mehr rechtechkigen Querschnitt hergestellt werden können.

Die Formteile 40, 41 legen die Aussenkontur des zu bildenden Reifens fest. Der Raum 42 ist innen durch den Reifenkern 42 begrenzt. Er kann durch geeignete Angusskanäle mit dem Reaktionsgemisch gefüllt werden. Der Materialeintrag ist strichliert angedeutet. Der Reifenkern 43 besteht aus einem elastischen torusförmigen Balg 44; dieser Balg ist nicht schlauchartig rund, sondern im unteren Bereich offen und mit Wülsten 45 und Armierungen versehen. Um den Balg 44 ist eine Auffütterung 46 vorhanden. Die Wülste 45 sind zur genauen Justierung mit den Flanschen 47, 48, 49 verbunden; durch die Stifte 50 ist der Balg in der Form fixiert. Im justierten Zustand ist der Balg 44 druckdicht; über die Öffnung 51 kann das Druckmittel (Ol, Wasser, Dampf, Luft) zu- und abgeführt werden. Der Druck im Balg ist höher als der für die Reifenherstellung erforderliche Formgebungs- und Reaktionsdruck, üblicherweise zwischen 1 und 10 bar. Im Reifenkern 43, besonders in dem inneren Teil, sind in den meisten Fällen Armierungen vorhanden.

**Patentansprüche:**

1. Verfahren zur Herstellung von verstärkten Luftreifen (5, 22) aus Mehrkomponentenreaktionsgemischen, wobei zur Erzeugung der inneren Reifenkontur eine einzige Kernform (1, 20, 27, 43) erforderlich ist, dadurch gekennzeichnet, dass als Kern ein Balg (2, 44) verwendet wird, der erforderlichenfalls durch eine rotationssymmetrische Auffütterung (46) aus elastischem Material die gewünschte Kerninnenkontur des fertigen Reifens gewährleistet, und dass zunächst elastische Teilbereiche (7, 25) des Kerns soweit zur äusseren Reifenseite hin verformt werden, dass daran anliegende Verstärkungseinlagen (24) bereits die im fertigen Reifen gewünschte Lage einnehmen und die Verstärkungseinlagen (24) durch die verformten Kernteilbereiche (25) in dieser gewünschten Lage durch Reibschluss fixiert werden, der Raum (34, 42) zwischen der Form (29, 30, 40, 41) und dem Kern (1, 20, 27, 43) soweit mit Reaktionsgemisch gefüllt wird, dass die Verstärkungseinlagen (24) auch von dem sich bildenden äusseren Reifenteil her gehalten werden, dann die elastische Verformung der Teilbereiche (7, 25) des Kerns rückgängig gemacht wird und der verbleibende Raum zwischen dem äusseren Reifenteil und dem jetzt die Innenkontur des fertigen Reifens bildenden Kern (1, 20, 27, 43) mit Reaktionsgemisch gefüllt wird.

2. Vorrichtung zur Herstellung von verstärkten Luftreifen nach dem Schleudergiessverfahren nach Anspruch 1, enthaltend eine rotierende Form (29, 30, 40, 41) zur Festlegung der Aussenkontur, einen mitrotierenden Kern (1, 20, 27, 43) zur Festlegung der Innenkontur des fertigen Reifens (5, 22), sowie entsprechende Dosier, und Mischvorrichtungen zur Einspeisung von gegebenenfalls sich in der Zusammensetzung ändernden Mehrkomponentenreaktionsgemischen in den Raum (34, 42) zwischen Schleudergiessform und Kern, dadurch gekennzeichnet, dass der Kern (1, 20, 27, 43) im Ruhezustand die an sich gewünschte glatte Kernform (12) für die Innenkontur des fertigen Luftreifens (5, 22) bildet, jedoch an der Kernform (1, 20) durch Druckbeaufschlagung (9) von der Kerninnenseite her elastisch verformbare Teilbereiche (7, 8, 25) vorhanden sind, durch die sich der Kern so aufweiten lässt, dass die Verstärkungseinlagen (11, 24) für den Reifen (5, 22) an dem verformten Kern in eine solche Lage durch Reibung fixierbar sind, dass sie in diesem Zustand die Lage wie im fertigen Reifen einnehmen.

3. Vorrichtung nach Anspruch 2, dadurch gekennzeichnet, dass die elastisch verformbaren Teilbereiche (7, 8, 25) an einem metallischen segmentierten Kern angebracht sind.

4. Vorrichtung nach Anspruch 2, dadurch gekennzeichnet, dass die elastisch verformbaren Teilbereiche an einem elastischen Balg (2) angebracht sind, der jedoch im Vergleich zu den elastisch verformbaren Teilbereichen weniger verformbar ist.

5. Vorrichtung nach Anspruch 2, dadurch gekennzeichnet, dass der mitrotierende Kern (43) zur Festlegung der Innenkontur der Reifen aus einem näherungsweisetorusförmigen, elastischen, mit Druck beaufschlagbaren Balg (44) mit einer rotationssymmetrischen Auffütterung (46) aus elastischem Material besteht.

6. Vorrichtung nach Ansprüchen 2 bis 5, dadurch gekennzeichnet, dass die elastisch verformbaren Teilbereiche mit Druck von der Reifenkerninnenseite her elastisch verformbare Membranen (25) sind.

**Claims:**

1. A method of producing reinforced pneumatic tyres (5, 22) from multi-component reaction mixtures, a single core mould (1, 20, 27, 43) being required to form the internal tyre contour, characterized in that a skin (2, 44) is used as core, which guarantees the desired internal contour of the finished tyre where necessary by means of a rotationally symmetric sheath (46) of elastic material, and in that elastic portions (7, 25) of the core are initially deformed toward the exterior of the tyre sufficiently far for reinforcing inlays (24) lying on them to assume the position desired in the finished tyre and the reinforcing inlays (24) are fixed in this desired position by friction by means of the deformed core portions (25), the space (34, 42) between the mould (29, 30, 40, 41) and the core (1, 20, 27, 43) is filled with reaction mixture until the reinforcing inlays (24) are also held by the outer tyre part being formed, the elastic deformation of the portions (7, 25) of the core is then withdrawn and the remaining space between the outer tyre part and the core (1, 20, 27, 43) now forming the internal contour of the finished tyre is filled with reaction mixture.

2. An apparatus for producing reinforced pneumatic tyres by the centrifugal casting method according to claim 1, containing a rotating mould (29, 30, 40, 41) for determining the external contour, a core (1, 20, 27, 43) which rotates with the mould for determining the internal contour of the finished tyre (5, 22) as well as suitable metering and mixing devices for supplying multi-component reaction mixtures, which optionally vary in composition into the space (34, 42) between the centrifugal casting mould and the core, characterized in that, in the rest position, the core (1, 20, 27, 43) forms the smooth core mould (12) desired *per se* for the internal contour of the finished pneumatic tyre (5, 22), but portions (7, 8, 25) which are elastically deformable from the interior of the core by applying pressure (9) are provided on the core mould (1, 20) and allow the core to expand sufficiently far for the reinforcing inlays (11, 24) of the tyre (5, 22) to be fixed by friction on the deformed core in such a position that they assume in this state the same position as in the finished tyre.

3. An apparatus according to claim 2, characterized in that the elastically deformable portions (7, 8, 25) are arranged on a metallic segmented core.

4. An apparatus according to claim 2, characterized in that the elastically deformable portions are arranged on an elastic skin (2) which is, however, less deformable in comparison with the elastically deformable portions.

5. An apparatus according to claim 2, characterized in that the core (43) which rotates with the mould and determines the internal contour of the tyre consists of an approximately torus-shaped, elastic, pressurisable skin (44) with a rotationally symmetric sheath (46) of elastic material.

6. An apparatus according to claims 2 to 5, characterized in that the elastically deformable portions are membranes (25) which can be deformed elastically by pressure from the interior of the tyre core.

## Revendications:

1. Procédé pour fabriquer des bandages pneumatiques renforcés (5, 22) en mélanges de réaction à plusieurs composants, une seule forme de noyau (1, 20, 27, 43) étant alors nécessaire pour produire le contour interne du bandage, caractérisé en ce qu'on utilise comme noyau une enveloppe (2, 44) qui assure par un garnissage symétrique en rotation (46) en une matière élastique le contour interne de noyau désiré du bandage fini, et en ce que tout d'abord on déforme les zones partielles élastiques (7, 25) du noyau suffisamment vers le côté externe du bandage pour que des garnitures de renforcement (24) qui y reposent prennent déjà la position désirée dans le bandage fini et que les garnitures de renforcement (24) soient fixées par les zones partielles déformées (25) du noyau dans cette position désirée par un effet de friction, l'espace (34, 42) entre le moule (29, 30, 40, 41) et le noyau (1, 20, 27, 43) étant rempli de mélange de réaction au point que les garnitures de renforcement (24) sont maintenues également depuis la partie externe du bandage qui se forme, la déformation élastique des zones partielles (7, 25) du noyau étant ensuite annulée et l'espace subsistant entre la partie externe du bandage et le noyau (1, 20, 27, 43), formant désormais le contour interne du bandage fini, étant rempli de mélange de réaction.

2. Dispositif pour fabriquer des bandages pneumatiques renforcés selon le procédé de coulée centrifuge selon la revendication 1, comprenant un moule rotatif (29, 30, 40, 41) pour déterminer le contour externe, un noyau (1, 20, 27, 43) tournant avec le moule pour déterminer le contour interne du bandage fini (5, 22), ainsi que des dispositifs correspondants de dosage et de mélange pour fournir des mélanges de réaction à plusieurs composants, dont la composition varie éventuellement, à l'espace (34, 42) se trouvant entre le moule de coulée centrifuge et le noyau, caractérisé en ce que le noyau (1, 20, 27, 43) forme, dans la condition de repos, la configuration de noyau (12) lisse désirée en soi pour le contour interne du bandage pneumatique fini (5, 22), mais en ce que sont présentes sur la forme du noyau (1, 20) des zones partielles (7, 8, 25), déformables élastiquement par pression (9) à partir du côté interne du noyau, par lesquelles le noyau peut s'élargir de manière que les garnitures de renforcement (11, 24) du bandage (5, 22) puissent être fixées par friction sur le noyau déformable dans une position telle qu'elles prennent dans cette condition la position correspondant au bandage fini.

3. Dispositif selon la revendication 2, caractérisé en ce que les zones partielles élastiquement déformables (7, 8, 25) sont placées sur un noyau métallique segmenté.

4. Dispositif selon la revendication 2, caractérisé en ce que les zones partielles élastiquement déformables sont placées sur une enveloppe élastique (2) qui, cependant, peut être déformée à un moindre degré que les zones partielles élastiquement déformables.

5. Dispositif selon la revendication 2, caractérisé en ce que le noyau corotatif (43) est constitué, pour déterminer le contour interne du bandage, par une enveloppe (44) élastique presque toroïdale, alimentable en pression, ayant un garnissage (46) symétrique en rotation, en matière élastique.

6. Dispositif selon les revendications 2 à 5, caractérisé en ce que les zones partielles élastiquement déformables sont des membranes (25) déformables élastiquement par pression depuis le côté interne du noyau du pneumatique.

FIG. 1

FIG. 2

FIG. 3

FIG. 4

FIG. 5

FIG. 6